# EUROPEAN PATENT SPECIFICATION

(11) **EP 2 258 940 B1**
(45) Date of publication and mention of the grant of the patent: **13.03.2013**
(21) Application number: 09161652.4
(22) Date of filing: 02.06.2009
(51) Int. Cl.: F03D 3/04

(54) **Wind power station with a darrieus rotor**
Windkraftstation mit einem Darrieus-Rotor
Station éolienne avec rotor Darrieus

(43) Date of publication of application: 08.12.2010
(73) Proprietor: Penn Anneliese, 82223 Eichenau (DE)
(72) Inventor: Penn, Robert, 82223, Eichenau (DE)
(74) Representative: Lohr, Georg

(56) References cited:
- DE-T2- 69 220 857
- DE-U1-202006 009 951
- FR-A- 611 785
- FR-A- 2 492 007
- GB-A- 2 125 113
- GB-A- 2 199 377
- JP-A- 59 103 973
- SU-A1- 542 016
- US-A- 1 036 128
- US-A- 4 012 163
- US-A- 4 115 027
- US-A- 4 162 410

## Description

### BACKGROUND OF THE INVENTION

### 1. Field of the Invention

The invention relates to a wind power station with a Darrieus Rotor and a wind concentrator formed by wind guides as defined by the preamble of claim 1. The invention further relates to a wind guide for a wind concentrator of a wind power station with a Darrieus Rotor and to the respective wind concentrator.

### 2. Description of Related Art

A Darrieus Rotor is a rotor with at least one rotor blade. Typically a Darrieus Rotor comprises two or three rotor blades. The rotor blade rotates around a vertical rotor axis. The horizontal cross section of the rotor blade has a foil shape. The torque provided by the rotor is due to the forward components of the lifting forces exercised by the wind on the foil shape rotor blades. The longitudinal axis of the rotor blades is often parallel to the rotor axis, but can as well be inclined with respect to the rotor axis or the vertical.

A wind power station with a Darrieus Rotor and a wind concentrator is disclosed in DE-T2-692 20 857. The wind concentrator comprises twelve wind guides that are arranged concentrically around the Darrieus Rotor. Each wind guide has a fixed position and the shape of a vertically extending symmetric airfoil. The planes defined by tip and tail of the wind guides intersect in the axis of rotation of the Darrieus Rotor. The wind concentrator enlarges the amount of wind that powers the Darrieus Rotor and where necessary deflects the wind in the direction of the rotor axis of the Darrieus Rotor. The wind concentrator is -so to speak- a wind lens focussing the wind on the rotor axis independently from the wind direction.

JP 59 103 973 A relates to wind power station with a central rotor having a vertical axis and a wind concentrator surrounding the rotor. The wind concentrator has multiple windguides, each comprising pivotable wind deflector plates.

GB 2 199 377 A and DE 20 2006 009951 U1 each disclose a wind power station with a Darrieus Rotor.

It is an object of the invention to improve the power retractable from a wind power station with a Darrieus Rotor and a wind concentrator.

### BRIEF SUMMARY OF THE INVENTION

The invention is defined by the independent claims. Advantageous embodiments are subjects of the respective dependent claims.

The wind power station comprises a Darrieus Rotor with a rotor axis and at least one rotor blade. Further the wind power station comprises a wind concentrator. The wind concentrator comprises an assembly of wind guides positioned around the Darrieus Rotor. At least one of the wind guides comprises at least a first and a second wind deflector plate, the first and the second wind deflector plates being parallel. Preferably each wind guide comprises at least a first wind deflector plate and a second wind deflector plate, the first and the second wind deflector plates being parallel. The following description assumes that all wind guides each comprise at least two parallel wind deflector plates. But of course one corresponding wind guide is sufficient to enhance the retractable power.

The invention is based on the observation that the torque exercised by the wind on the foil shape rotor blade of the Darrieus Rotor has a maximum if the wind is inclined about 10° (depending on the foil shape, for typical foil shapes between about 5° and 20°) from the radial direction against the direction of the rotating rotor blade. This angle is called optimum angle. Without wind concentrator and with wind coming from the south the maximum torque is generated on a counter clockwise rotating rotor blade if the blade passes the 170° position (160° to 175°position, depending on the foil shape, 0° corresponds to the northern direction, positive angle are measured counterclockwise). The "slice" of wind blowing against the rotor blade when it passes this position has the optimum direction, because it blows against the rotor blade at the optimum angle. This slice is called "optimum slice". The slices of wind that blow against the Rotor left or right of the optimum slice, so called "non optimum slices", are deflected to blow against the rotor in an angle that is closer to the optimum angle.

From the viewpoint of a wind guide the direction of deflection of wind blowing against the right side of the wind guide must be different from the direction of deflection of wind blowing on the left side of the wind guide. Thus, the directions of deflection of wind coming from the right and from the left of the wind guide are asymmetric with respect to the radial direction of the respective wind guide. The radial direction of each wind guide is defined by the vector from the respective wind guide to the rotor axis. Wind blowing against the wind guide in an angle smaller 0° and bigger equal -90° (positive angles open counter clockwise) with respect to the radial direction is considered to blow against the wind guide from the left side and wind blowing against the wind guide in an angle bigger 0° and smaller equal 90° with respect to the radial direction is considered to blow against the wind guide from the right side. Further, if the respective wind guide is positioned in the optimum slice, e.g. because the wind turned, the wind should passes without deflection and essentially without slowing down due to the wind resistance of the wind guide

The asymmetric deflection with respect to the radial direction of the respective wind guide and the required transmissibility in the optimum direction is provided by the wind guide comprising at least a first wind deflector plate and a second wind deflector plate, the first and the second wind deflector plates being parallel.

If the wind deflector plates are parallel to the optimum direction the wind passes the wind guide with low losses. Due to the channel(s) between the wind deflector plates turbulences are reduced, resulting in a higher torque. Further the wind guide has two different angles of deflection.

A first direction of deflection is defined by the vector from the most windward edge of the wind deflector plates to the most leeward edge of the wind deflector plates of the respective wind guide. The wind is deflected in this first direction of deflection if the wind hits the respective wind guide such that the wind does not enter directly the channel(s) between the wind deflector plates of the respective wind guide. Briefly speaking, the wind is deflected as if the wind guide would be a single wall spanning from the windward edge of the wind guide to the leeward edge of the wind guide, although the wind guide is an assembly of at least two wind deflector plates. If the wind, however, hits the respective wind guide from the opposite site, i.e. such that it can enter the channel(s) between the wind deflector plates, the direction of deflection is the direction of the vectors from the windward edges to the respective leeward edges of each wind deflector plate. This is the second direction of deflection. The two directions of deflection can thus be chosen and adjusted according to the foil profile of the rotor blade by selecting the inclination of the wind deflector plates against the radial direction on the one hand and the displacement of the wind deflector plates in the radial direction together with the distance between the wind deflector plates.

The wind deflector plates of the wind guides may have the same size. This helps to keep costs for the wind guides low.

The wind guides may be placed symmetrically around the rotor axis to improve the retractable power from the wind power station independent of the wind direction. There is no need to rotate the wind concentrator to adjust it according to the wind direction.

The positions of the wind guides are fixed. This helps as well to keep costs low.

The wind concentrator may comprise sixteen wind guides. This number permits a good balance of wind collection and deflection on the one hand and slipstream effects on the other hand.

The minimum distance between the rotor blade in rotation and the wind guides is preferably between 0,05 and 0,25 times, more preferably between 0,1 and 0,2 times, e.g. 0,16 times, the radius of the Darrieus Rotor. This distance yields an optimum torque gain of the wind concentrator.

The extension of the wind guides in radial direction is preferably between 0,2 and 0,65 times the radius of the Darrieus Rotor. This as well improves the torque gain.

The wind concentrator can optionally or as alternative to the wind guides comprise at least one wind director. Preferably the concentrator comprises more than one e.g. three or four wind directors. The wind director(s) is/are positioned in the cylinder defined by the inner perimeter of the rotating rotor blade(s). A wind director is thin workpiece with two wind guiding cylinder surfaces generated by parallel translation of the rotor axis along a template. The template may be a straight line or curved (for the definition of a cylinder surface see Bonstein, Semedjajew, Taschenbuch der Mathematik, Verlag Harry Deutsch, Frankfurt 1993).

The wind director reduces turbulences produced by the rotor blade passing the windward area of the Darrieus Rotor and thereby enhances the propulsion of the rotor blade(s) passing the leeward area of the Darrieus Rotor.

The wind director may be configured to direct the flow such that the wind blows at the optimum angle, or at least closer to the optimum angle than without wind director, against the foil of the rotor blade when the rotor blade(s) pass(es) the leeward area of the Darrieus Rotor, thereby further enhancing propulsion, i.e. the retractable torque and power. The leeward area is the area of the Darrieus Rotor enclosed by the leeward half of its perimeter. The windward area is defined accordingly as the area enclosed by the the windward half of the perimeter of the Darrieus Rotor.

The wind directors may be adjusted e.g. pivoted according to the wind direction. To this end the wind director is rotatably supported. The axis of rotation of the wind director may be as well the axis of rotation of the Darrieus Rotor. The wind directors can be adjusted by motor drive. Alternatively the wind director(s) are self adjusting. To this end the center of area can be positioned with an offset to the respective axis of rotation, e.g. the rotor axis.

If the wind power station comprises a plurality of wind directors, the at least two of the wind directors are connected by a base plate and/or a top plate. The base plate and/or the top plate are each preferably orthogonal to the rotor axis and/or parallel to the torque arms. The base and/or top plates reduce turbulences due to the torque arms and thereby enhance the torque produced by the wind on the rotor blades if the rotor blades pass the leeward area of the Darrieus Rotor.

### BRIEF DESCRIPTION OF THE DRAWINGS

In the following, the invention will be described by way of example, with reference to the drawings:
- Figure 1: shows a top view of a wind power Station with a Darrieus Rotor,
- Figure 2: shows a side view of the wind power station of Figure 1,
- Figure 3: shows a top view of the wind power station of Figure 1 with wind blowing from the south direction,
- Figure 4: shows a top view of a wind power Station with a Darrieus Rotor,
- Figure 5: shows a top view on a wind guide,
- Figure 6: shows a top view on a wind guide,
- Figure 7: shows a top view on a wind guide,
- Figure 8: shows a top view on a wind guide,
- Figure 9: shows a top view on a wind guide,
- Figure 10 a, b: show each a top view of a wind guide,
- Figures 11a, b: show each a top view of a wind guide,
- Figure 12: shows a top view on a wind power station with wind directors,
- Figure 13: shows a cross section of the wind power station of fig. 12 along plane A-A, and
- Figure 14: a top view on a prior art wind power station.

### DETAILED DESCRIPTION OF THE DRAWINGS

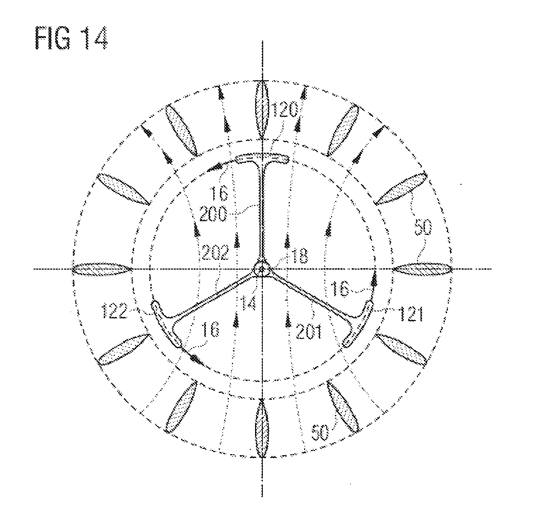

Figure 14 shows a top view of a prior art wind power station. The wind power station comprises a Darrieus Rotor 10 with three rotor blades 120, 121 and 122. The rotor blades have the shape of a symmetric foil and are attached via torque arms 200, 201 and 202 to a shaft 18 and circle around a rotor axis 14. The direction of rotation is indicated by arrows 16. The shaft is coupled to a generator (not shown). The wind power station further comprises a wind concentrator 40 of twelve wind guides 50. Each wind guide 50 has the shape of a symmetric foil. The tails of the wind guides 50 point towards the rotor axis 14. The wind guides 50 thus direct the wind towards the rotor axis 14. One may consider the arrangement of wind guides 50 as a "wind lens" focussing wind independent from its incident direction onto the rotor axis 14.

In the following some reference numerals have annexed letters, e.g. 50a, 50b, 50c, ... 50p for the wind guides 50. These letters permit to distinguish between identical parts that have different positions. The letters are omitted, if the respective positions of the otherwise identical parts are not considered in the context of the sentence. Newly introduced reference numerals are introduced as e.g. "channels 90 (90a to 90p)" to indicate that there are identical parts labelled "90a to 90p" referred to as 90, if the respective positions are not considered in the context of the sentence.

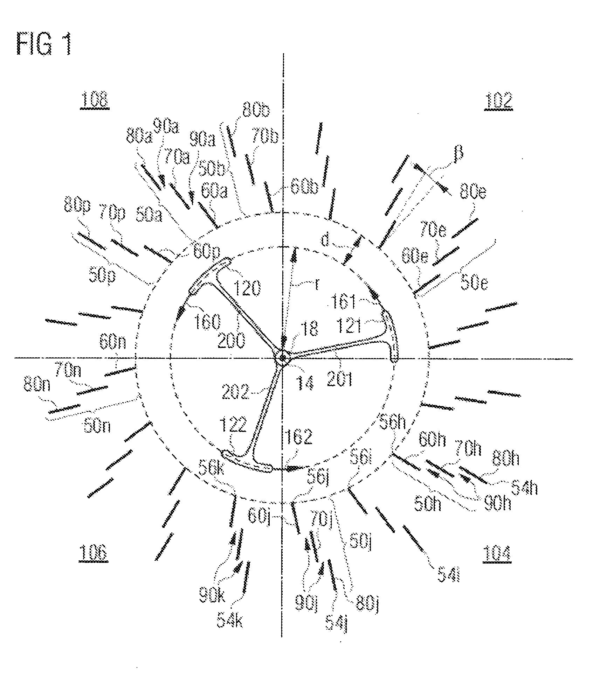

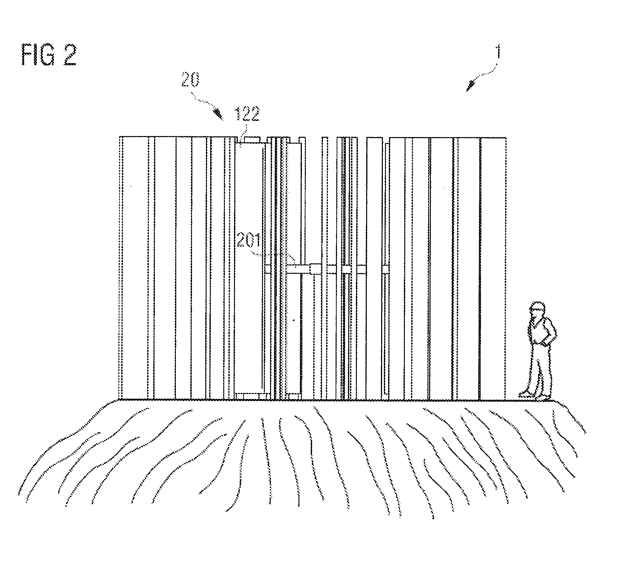

The wind power station 1 in Figures 1 to 3 as well comprises a Darrieus Rotor 10 with three rotor blades 120, 121 and 122 (see Fig 1). The rotor blades 120, 121 and 122 have a symmetric foil shape and are attached via torque arms 200, 201 and 202 to a shaft 18 and circle around a rotor axis 14. To improve the power retractable from the wind power station 1 at a given speed of wind, the wind power station 1 comprises a wind concentrator 40 with sixteen wind guides 50 (50a to 50p). For clarity not all wind guides are labelled in the figures. The wind guides 50a to 50p are arranged concentrically to the rotor axis 14 and are evenly distributed around the Darrieus Rotor 10. The distance d between the Darrieus Rotor and the wind guides is about 0,1 times the radius r of the Darrieus Rotor. Each wind guide 50 ( 50a to 50p) comprises three wind deflector plates 60, 70, 80 (60a, 70a and 80a to 60p, 70 and 80p). The wind deflector plates 60, 70 and 80 of each wind guide 50 are parallel to each other and equally spaced. The wind deflector plates 60, 70, 80 are arranged to let wind pass without deflection if the wind guide is positioned in the optimum slice, i.e. the wind deflection plates 60, 70 and 80 are inclined against the radial direction of the rotor blades 120, 121 and 122 in the position closest to the wind guide 50. The angle of inclination depends on the foil shape of the rotor blade and is preferably the above defined optimum angle. In this example the angle of inclination β is about 10° (typical values for β are between 2° and 20°, i.e. 2° ≤ β ≤ 20°).

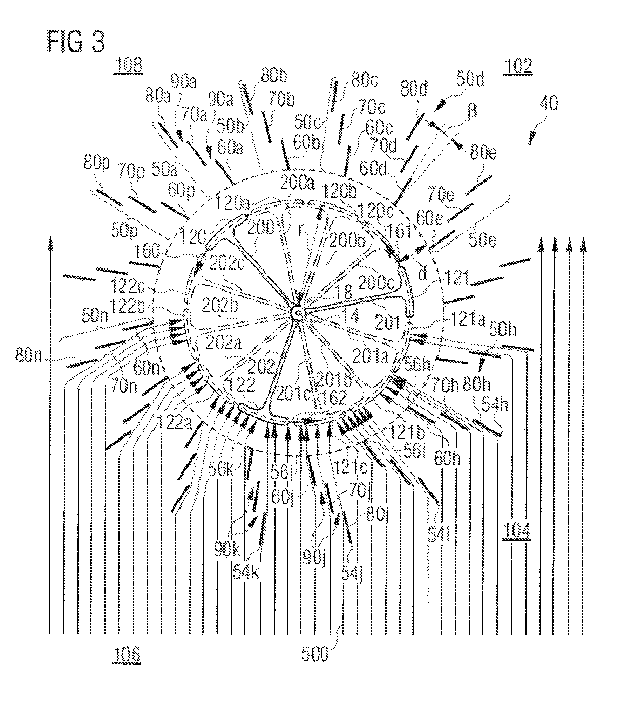

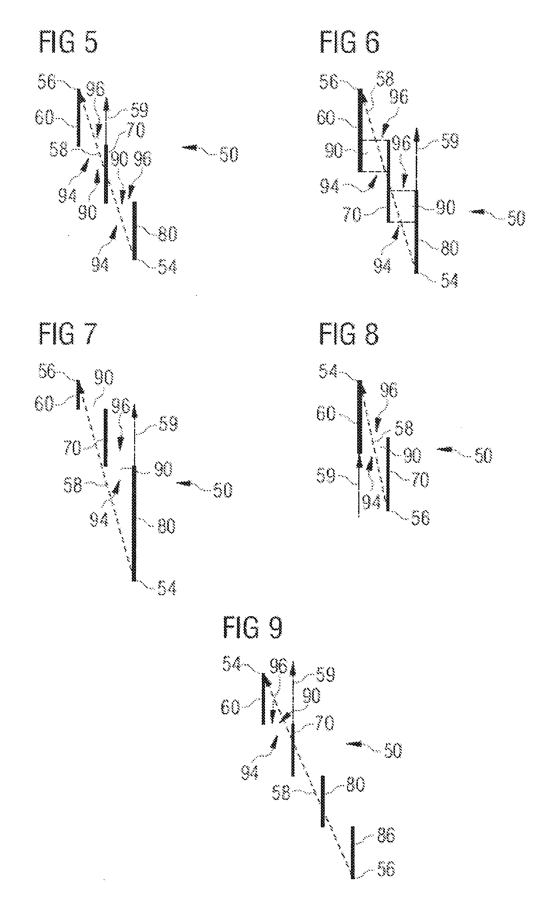

Between the wind deflector plates 60, 70, 80 of each wind guide 50 are channels 90 (90a to 90p) with a channel entry 94 (94a to 94p) and a channel exit 96 (96a to 96p), compare fig. 5 to fig 9. If the wind enters parallel to the respective wind deflector plates 60, 70, 80 into the channels 90 the wind passes the respective wind guide 50 without being deflected. In case the wind enters the channels 90 under an angle, the wind is deflected by the wind deflector plates 60, 70, 80 essentially in their direction. In other words the wind is deflected in the respective optimum direction. In the example of fig. 3 this is the case for the wind guides 50g to 50j in the south-east quadrant 104. If the wind blows against the wind guides 50 from a direction such that the channel entries 94 are in the leeward side of the respective wind deflector plates 70, 80, the wind guide 50 acts like wall that spans from the most windward edge 54 of the wind guide 50 plates to the leeward edge 56 of the wind guide 50. In the example of fig. 3 this is the case for the wind guides 50k to 50m in the south-west quadrant 106.

In fig.3 the rotor blades 120, 121, 122 are together with the corresponding torque arms shown in different positions 120a - 120c, 121a -121c, 1221-122c, indicated by dashed-dotted lines. The wind 500 from the south direction (bottom) is symbolized by parallel arrows and deflected by the wind guides in the south west 106 and south east quadrant 104 towards the respective optimum direction. The shown deflection is for demonstrational purposes only and of course not in scale.

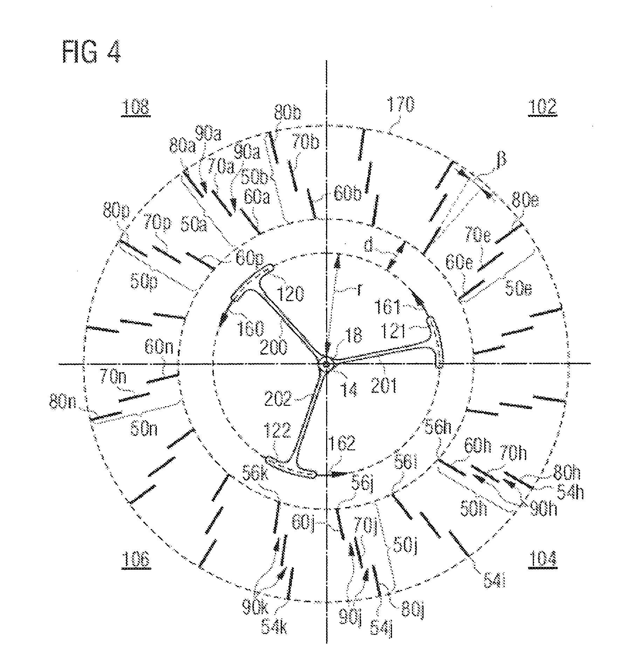

The wind power station in fig. 4 is distinguishes over the wind power station of fig. 1 to fig. 3 only in that it further comprises a wind protection shield. The wind protection shield comprises grid, e.g. like a wire mesh. Wind at low speed can pass the wind protection shield with essentially no slowing down of the wind. At higher wind speeds, however, the wind protection shield produces turbulences and slows the wind significantly down. Thus, the wind protection shield permits to protect other components of the wind power station, e.g. the Darrieus Rotor or the wind guides of being subjected to storm forces, i.e. wind speeds, outside the respective specifications that may cause damage. Further the wind protection shield may at the same time protect birds of being hit by the Darrieus Rotor.

Fig. 5 is a top view of a single wind guide 50 of the wind power stations 1 in fig. 1 to fig. 4. The wind guide comprises three wind deflector plates 60, 70 and 80. The wind deflector plates 60, 70, 80 have the same size and are parallel to each other. The wind deflector plate 60 is the wind deflector plate of the wind guide 50 that is closest to the perimeter of the Darrieus Rotor (see fig. 1), wind deflector plate 70 is the second closest wind deflector plate of the wind guide 50 and wind deflector plate 80 has the biggest distance to the perimeter of the Darrieus Rotor. In other words: the three wind deflector plates are parallel displaced. Between the wind deflector plates 60, 70 and 70, 80 are channels 90. The wind guide 50 has two directions of deflection, depending from which side the wind blows against the wind guide 50: The first direction of deflection is defined by the vector 58 from the windward edge 54 of the wind guide 50 to the leeward edge 56 of the wind guide. The vector 58 is shown as a dashed arrow. The second direction of deflection is parallel to the wind deflection plates 60, 70, 80 as indicated by the dotted vector 59. If the wind blows from a direction such that it can enter and pass through the channels 90, i.e. in the shown example from the left-bottom, the wind is deflected in the second direction defined by vector 59. If the wind blows against the wind guide 50 in a direction such that the channel entries 94 (compare fig. 6) are in lee of the respective wind deflection plate 70, 80 the wind is deflected by the wind guide 50 in the first direction as indicated by vector 58.

Fig. 6 shows a wind guide 50, similar to the wind guide in fig. 5. This wind guide 50 is an alternative to the wind guides shown in fig. 1 to 5. It differs only in that the wind deflector plates 60, 70 and 80 are overlapping. Thus, the channels 90 have a longitudinal extension, i.e. channel entries 94 can be distinguished from channel exits 96, what is different from the situation in fig. 1 to fig. 5, where channel entries and the respective channel exits are identical. Compared to the wind guide of fig. 5 turbulences are reduced due to the extension of the channels 90. On the other hand, however the wind resistance due to friction is raised because the wind deflection plates 60, 70 and 80 are longer in the direction 59 in relation to the extension of the wind guide in the same direction. This wind guide 50 follows the same concept as the wind guides explained with reference to fig. 1 to 5 and can be used instead. The same reference numerals denote the same details.

In fig. 7 an alternative for the wind guides in fig. 1 to fig. 6 is shown. This wind guide 50 comprises as well three wind deflector plates 60, 70, 80 being aligned in parallel. Wind deflector plate 60 has the shortest extension in direction of vector 59. Wind deflector plate 70 has an extension in direction 59 of about twice the respective extension of wind deflector plate 60. Wind deflector plate 80 has an extension in direction 59 of about twice the respective extension of wind deflector plate 70. This wind guide follows the same concept as the wind guides explained with reference to fig. 1 to 6 and can be used instead. The same reference numerals denote the same details.

The wind guide 50 in fig. 8 is a further alternative to wind guides in fig. 1 to fig. 7. This wind guide comprises only two wind deflector plates 60 and 70. This wind guide is cheaper, but less efficient that the wind guides in shown in fig. 1 to 7.

The wind guide in fig. 9 comprises four wind deflector plates 60, 70, 80 and 86. The wind deflector plates 60, 70, 80, 86 are parallel displaced but have no overlap. The underlying functional principle of this wind guide is the same as of the wind guides in fig. 1 to fig.5. The wind guide 50 may be used instead and the same reference numerals denote the same details. This wind guide permits a larger angle between the two different directions of deflection 58, 59 without enlarging the channel width.

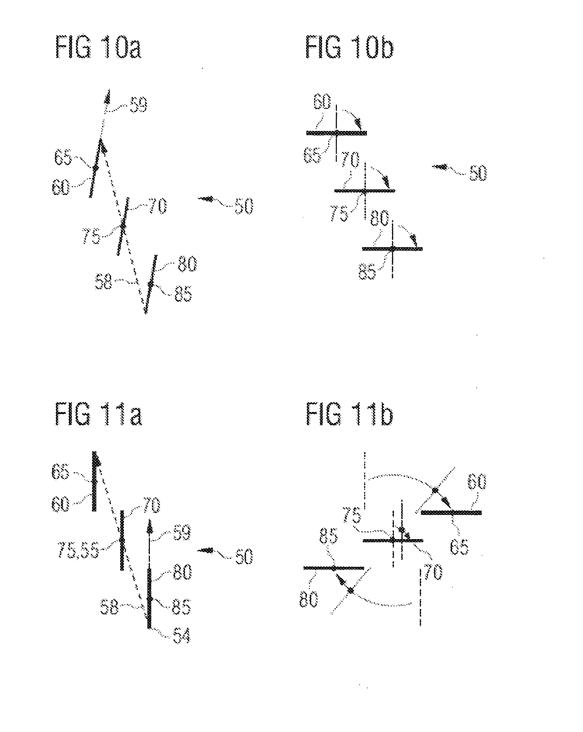

Fig. 10a shows a wind guide similar to the wind guide in fig. 5, but the wind deflector plates 60, 70, 80 can be pivoted independently around axis 65, 75 and 85, respectively (the same reference numerals indicate the same detail). This permits to optimize the directions of deflection as a function of the wind direction. Further the wind deflector plates 60, 70, 80 can be turned to block the wind (see fig. 10b, supposing south wind). This blocking function can be used to prevent damage of the Darrieus Rotor in case of wind overload

The wind guide in fig. 11a provides a further degree of freedom to optimize the directions of deflection, because not only the wind deflector plates 60, 70, and 80 can be pivoted separately around axis 65, 75, and 85, but as well the whole wind guide can be pivoted around axis 55, being in this example identical to axis 75. In fig. 11b the dashed lines indicate the positions of the wind deflector plates 60, 70, 80 in fig. 11a. From these positions the wind guide was pivoted into a block position (full lines). Only for demonstration of the flexibility of the wind guide there are further indicated dotted positions of the wind deflector plates 60, 70, 80.

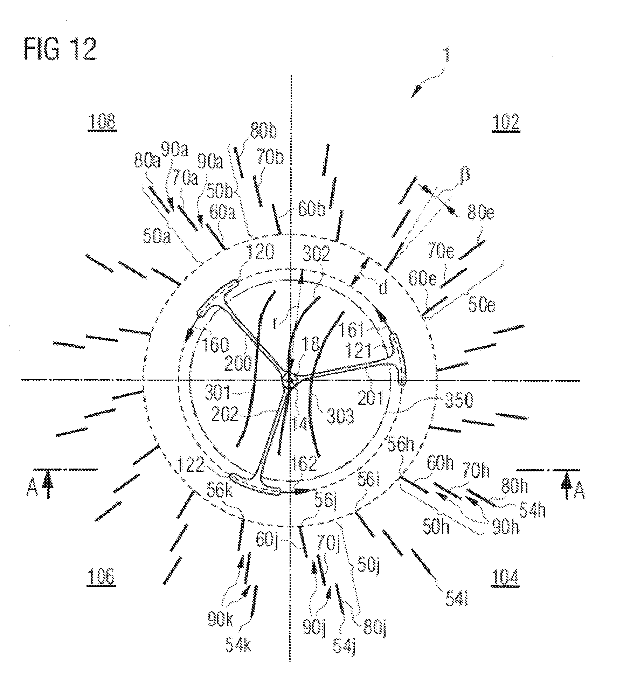

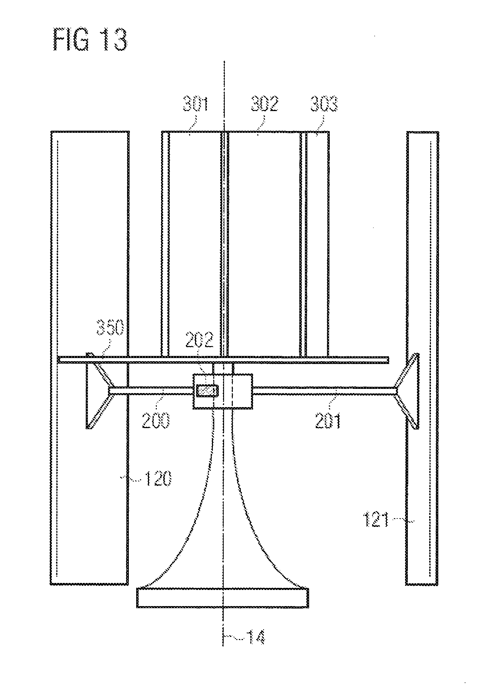

The wind power station of fig. 12 and 13 has all details of the wind power station in fig. 1 to 3, although the wind guides 50 are not shown in fig.13. Further the wind concentrator comprises three wind directors 301, 302, 303. The wind directors 301, 302 and 303 are connected via base plate 350. The base plate is parallel to the torque arms 200, 201, 202. The wind directors 301, 302, 303 and the base plate are rotatably supported and can rotate freely around the rotor axis 14. The part of the wind directors 301, 302, 303 that are windward of the axis of rotation generate a torque that is directed in the opposite direction of the torque exercised on the leeward part of the wind directors 301, 302, 303 (with respect to the axis of rotation). The wind directors 301, 302, 303 are configured such that the two torques are in balance if the wind directors 301, 302, 303 are in a position such that the wind leaving the channels 390 between the wind directors blows against the rotor blade at the optimum angle. For simplicity the windward area of the Darrieus Rotor 10 is the area in which the wind blows against the outer surface of the rotor blade. The leeward area is correspondingly the area in which the wind blows against the surface of the rotor blade which is directed towards the rotor axis (14). With respect to fig. 3 the windward area is the area of the Darrieus Rotor enclosed by the windward, i.e. south half of the perimeter of the Darrieus Rotor, and the leeward area is the area enclosed by the leeward, i.e. north half of the perimeter of the Darrieus Rotor.

### LIST OF REFERENCE NUMERALS

- 1: wind power station
- 10: Darrieus Rotor
- 14: rotor axis
- 18: shaft
- 20: wind concentrator
- 40: wind concentrator
- 50, 50a to 50p: wind guide
- 54, 54a to 54p: windward edge of wind concentrator
- 56, 56a to 56p: leeward edge of wind concentrator
- 58: vector indicating the first direction of deflection
- 59: vector indicating the second direction of deflection
- 60, 60a to 60 p: wind deflector plate
- 70, 70a to 70p: wind deflector plate
- 80, 80a to 80p: wind deflector plate
- 90, 90a to 90p: channel between wind deflector plates
- 94, 94a to 94p: cannel entry,
- 96, 96a to 96p: channel exit, rotor side end of chanel 90
- 160, 161, 162: arrows indicating the direction of rotation
- 120 to 122: rotor blades
- 102: north east quadrant
- 104: south-east quadrant
- 106: south-west quadrant
- 108: north-west quadrant
- 170: protection shield
- 200 to 202: torque arm
- 301, 302, 303: wind directors
- 350: base plate
- 390: channel between wind directors
- d: distance between Darrieus Rotor and wind guides
- r: radius of the Darrieus Rotor
- β: angle of inclination of the wind deflector plates against the radial direction

## Claims

1. Wind concentrator (20) for a wind power station (1) comprising at least a Darrieus Rotor (10) with a rotor axis (14) and at least one rotor blade (120, 121, 122), wherein the wind concentrator (20) comprises a plurality of wind guides (50a to 50p), having a fixed position
**characterised in that**
each of the wind guides (50a to 50p) comprises a first wind deflector plate (60a to 60p) and at least a second wind deflector plate (70a to 70p), said wind deflector plates (60a to 60p; 70a to 70p) of each wind guide being parallel to each other.

2. Wind concentrator (20) of claim 1,
**characterised in that**
the first wind deflector plate (60a to 60p) and second wind deflector plate (70a to 70p) overlap.

3. Wind concentrator (20) of one of the preceding claims,
**characterised in that**
the wind guide (50a to 50p) further comprises a least a third wind deflector plate (80a to 80p), which is parallel to the first and second wind deflector plates (60a to 60p; 70a to 70p).

4. Wind power station (1) comprising at least the wind concentrator (20) of any of the preceding claims and a Darrieus Rotor (10).

5. Wind power station (1) of claim 4
**characterised in that**
the minimum distance (d) between the rotor blade (120, 121, 122) in rotation and the wind guides (50a to 50p) is between 0,05 and 0,25 times the radius (r) of the Darrieus Rotor.

6. Wind power station (1) of one of the precedent claims 4 or 5
**characterised in that**
the extension of the respective wind guide (50a to 50p) in radial direction is between 0,2 and 0,65 times the radius of the Darrieus Rotor.

7. Wind power station (1) of one of claims 4 to 6
**characterised in that**
the distance of the first wind deflector plate (60a to 60p) to the rotor axis (14) is shorter than the distance of the second wind deflector plate (70a to 70p) to the rotor axis (14).

8. Wind power station (1) of one of claims 4 to 7,
**characterised in that**
the wind deflector plates (60a to 60p, 70a to 70p, 80a to 80p) are inclined against the radial direction of the Darrieus Rotor

## Patentansprüche

1. Windkonzentrator (20) für eine Windkraftanlage (1), der wenigstens einen Darrieus-Rotor (10) mit einer Rotorachse (14) und wenigstens einem Rotorblatt (120, 121, 122) umfasst, wobei der Windkonzentrator (20) eine Mehrzahl von Windführungen (50a bis 50p) umfasst, die eine feste Position einnehmen,
**dadurch gekennzeichnet, dass**
jede der Windführungen (50a bis 50p) eine erste Windabweiserplatte (60a bis 60p) und wenigstens eine zweite Windabweiserplatte (70a bis 70p) aufweist, wobei die Windabweiserplatten (60a bis 60p; 70a bis 70p) jeder Windführung parallel zueinander angeordnet sind.

2. Windkonzentrator (20) gemäß Anspruch 1,
**dadurch gekennzeichnet, dass**
die erste Windabweiserplatte (60a bis 60p) und die zweite Windabweiserplatte (70a bis 70p) einander überlappen.

3. Windkonzentrator (20) eines der vorangehenden Ansprüche,
**dadurch gekennzeichnet, dass**
die Windführung (50a bis 50p) ferner wenigstens eine dritte Windabweiserplatte (80a bis 80p) umfasst, die parallel zu der ersten und zweiten Windabweiserplatte (60a bis 60p; 70a bis 70p) angeordnet ist.

4. Windkraftanlage (1), die wenigstens den Windkonzentrator (20) nach einem der vorangehenden Ansprüche und einen Darrieus-Rotor (10) umfasst.

5. Windkraftanlage (1) gemäß Anspruch 4,
**dadurch gekennzeichnet, dass**
der Mindestabstand (d) zwischen dem Rotorblatt (120, 121, 122) in Rotation und den Windführungen (50a bis 50p) zwischen 0,05 und 0,25 Mal den Radius (r) des Darrieus-Rotors beträgt.

6. Windkraftanlage (1) eines der vorangehenden Ansprüche 4 oder 5,
**dadurch gekennzeichnet, dass**
die Ausdehnung der entsprechenden Windführung (50a bis 50p) in radialer Richtung zwischen 0,2 und 0,65 Mal den Radius des Darrieus-Rotors beträgt.

7. Windkraftanlage (1) eines der Ansprüche 4 bis 6,
**dadurch gekennzeichnet, dass**
der Abstand der ersten Windabweiserplatte (60a bis 60p) zur Rotorachse (14) kürzer ist als der Abstand der zweiten Windabweiserplatte (70a bis 70p) zur Rotorachse (14).

8. Windkraftanlage (1) eines der Ansprüche 4 bis 7,
**dadurch gekennzeichnet, dass**
die Windabweiserplatten (60a bis 60p, 70a bis 70p, 80a bis 80p) gegen die radiale Richtung des Darrieus-Rotors geneigt sind.

## Revendications

1. Un concentrateur éolien (20) pour une centrale éolienne (1) comprenant au moins un rotor Darius (10) avec un axe de rotor (14) et au moins une lame de rotor (120, 121, 122), où le concentrateur éolien (20) comprend une pluralité de guides éoliens (50a à 50p), ayant une position fixe
**caractérisé en ce que**
chaque guides éoliens (50a à 50p) comprend une première plaque de déflecteur d'air (60a à 60p) et au moins une deuxième plaque de déflecteur d'air (70a à 70p), lesdites plaques de déflecteur d'air (60a à 60p ; 70a à 70p) de chaque guide éolien étant parallèles les unes aux autres.

2. Un concentrateur éolien (20) de la revendication 1,
**caractérisé en ce que**
la première plaque de déflecteur d'air (60a à 60p) et la deuxième plaque de déflecteur d'air (70a à 70p) se chevauchent.

3. Un concentrateur éolien (20) de l'une des revendications précédentes,
**caractérisé en ce que**
le guide éolien (50a à 50p) comprend de plus au moins une troisième plaque de déflecteur d'air (80a à 80p) qui est parallèle à la première et la deuxième plaque de déflecteur d'air (60a à 60p ; 70a à 70p).

4. Une centrale éolienne (1) comprenant au moins le concentrateur éolien (20) de n'importe quelle revendication précédente et un rotor Darius (10).

5. Une centrale éolienne (1) de la revendication 4
**caractérisée en ce que**
la distance minimum (d) entre la lame du rotor (120, 121, 122) en rotation et les guides éoliens (50a à 50p) est entre 0,05 et 0,25 fois le rayon (r) du rotor Darius.

6. Une centrale éolienne (1) de l'une des revendications 4 ou 5 précédentes **caractérisée en ce que**
l'extension du guide éolien respectif (50a à 50p) en direction radiale est entre 0,2 et 0,65 fois le rayon du rotor Darius.

7. Une centrale éolienne (1) de l'une des revendications 4 à 6
**caractérisée en ce que**
la distance de la première plaque de déflecteur d'air (60a à 60p) à l'axe du rotor (14) est plus courte que la distance de la deuxième plaque de déflecteur d'air (70a à 70p) à l'axe du rotor (19).

8. Une centrale éolienne (1) de l'une des revendications 4 à 7
**caractérisée en ce que**
les plaques du déflecteur d'air (60a à 60p, 70a à 70p, 80a à 80p) sont inclinées contre la direction radiale du rotor Darius.
